Europäisches Patentamt

European Patent Office

Office européen des brevets

(11) Publication number: **0 327 109 B1**

(12) **EUROPEAN PATENT SPECIFICATION**

(45) Date of publication of patent specification: **07.10.92**  (51) Int. Cl.⁵: **G11B 19/22**, G11B 19/20, G11B 19/00

(21) Application number: **89101926.7**

(22) Date of filing: **03.02.89**

(54) **Motor stop control device.**

(30) Priority: **05.02.88 JP 26266/88**

(43) Date of publication of application:
**09.08.89 Bulletin 89/32**

(45) Publication of the grant of the patent:
**07.10.92 Bulletin 92/41**

(84) Designated Contracting States:
**DE FR GB IT**

(56) References cited:
**GB-A- 2 167 252**

**PATENT ABSTRACTS OF JAPAN, unexamined applications, P field, vol. 10, no.382, December 20, 1986 THE PATENT OFFICE JAPANESE GOVERNMENT page 75 P 529**

**PATENT ABSTRACTS OF JAPAN, unexamined applications, P field, vol.9, no.163, July 9, 1985 THE PATENT OFFICE JAPANESE GOVERNMENT PAGE 77 P 371**

(73) Proprietor: **SHARP KABUSHIKI KAISHA**
**22-22 Nagaike-cho Abeno-ku**
**Osaka 545(JP)**

(72) Inventor: **Yamane, Daiji**
**Yamato-Ryo, 492 Minosho-cho**
**Yamatokoriyama-shi Nara-ken(JP)**
Inventor: **Horie, Nobuyuki**
**Mikasa-Ryo, 492 Minosho-cho**
**Yamatokoriyama-shi Nara-ken(JP)**
Inventor: **Taguchi, Aisaku**
**Yamato-Ryo, 492 Minosho-cho**
**Yamatokoriyama-shi Nara-ken(JP)**
Inventor: **Sugiura, Teruki**
**1-7, Kujohirano-cho**
**Yamatokoriyama-shi Nara-ken(JP)**

(74) Representative: **TER MEER - MÜLLER - STEINMEISTER & PARTNER**
**Mauerkircherstrasse 45**
**W-8000 München 80(DE)**

**PATENT ABSTRACTS OF JAPAN, unexamined applications, P field, vol. 8, no. 228, October 19, 1984 THE PATENT OFFICE JAPANESE GOVERNMENT PAGE 68 P 308**

**PATENT ABSTRACTS OF JAPAN, unexamined applications, P field, vol. 9, no. 48, February 28, 1985 THE PATENT OFFICE JAPANESE GOVERNMENT page 104 P 338**

## Description

The present invention relates to a motor stop control device for use, for example, in magneto-optical disk devices for controlling the rotational stop of a spindle motor employed therein. Patent abstracts of Japan, Vol. 10, No. 382 (P529), [2439], 20. 12. 1986, abstracting JP-A-61-172271, describes a motor stop control device which checks a reversal in the rotational direction of a spindle motor when applying a counter torque to the motor for stopping the same. The device detects the phase relation between two different frequency signals. As soon as the phase relation changes, a switch is turned off to cut the current to a coil means for generating the counter torque.

This device has a rather complicated structure as it needs two frequency generators for generating the two frequency signals.

Another conventional motor stop control device measures the pulse widths of pulses supplied from a frequency generator measuring the rotational speed of the spindle motor. As soon as the pulse width exceeds a predetermined pulse width, the counter torque is removed. This device has simple construction, however, the counter torque may be removed too early.

It is the object of the present invention to provide a motor stop control device having simple construction, but which is anyhow able to reliably stop a motor.

The motor stop control device of the present invention comprises the following means:
- a driver for driving said motor in at least three different states, which function to generate a first direction driving torque, a reverse direction driving torque, and no torque or a holding torque;
- a pulse generator for generating a pulse signal having a frequency corresponding to the rotational speed of said motor;
- a pulse width detecting means for detecting the pulse width t3 of said pulse signal;
- a storing means for storing the pulse width t0 of the pulse signal contained in a cycle preceding the present cycle;
- a comparator means for comparing the pulse width t1 of the present cycle with said stored pulse width t0 of the previous cycle, and for producing a terminate signal when said pulse width of the present cycle is smaller than said stored pulse width; and
- a control means for controlling said driver such that in response to the receipt of a stop command, said driver drives said motor to generate said reverse direction driving torque, and drives said motor, in response to the receipt of said terminate signal, to generate no torque or said holding torque.

The device of the present invention applies no torque or a holding torque as soon as it detects that the pulse width of the present cycle is shorter than the pulse width of the preceding cycle. This is only possible when the motor accelerates again, i. e. when it has already reversed its rotational direction.

Preferably, no torque or a holding torque is also applied in the case when the pulse width of the present cycle exceeds a predetermined time period. This time period is selected to correspond to a very low rotational speed in the direction in which the motor rotated before the stop signal was applied. With this embodiment, the motor can not only be stopped just after it has reversed ist rotational direction, but no torque or a holding torque can already be applied when the motor is close to the position of reversing its rotational direction.

The invention will become apparent from the following description taken in conjunction with the preferred embodiment thereof with reference to the accompanying drawings, in which:
Fig. 1 is a block diagram of a motor stop control device according to the present invention;
Fig. 2 is a flow chart of an operation carried out in a CPU shown in Fig. 1; and
Figs. 3a and 3b are graphs showing motor control states and waveforms of pulse signals as occuring in the present invention.

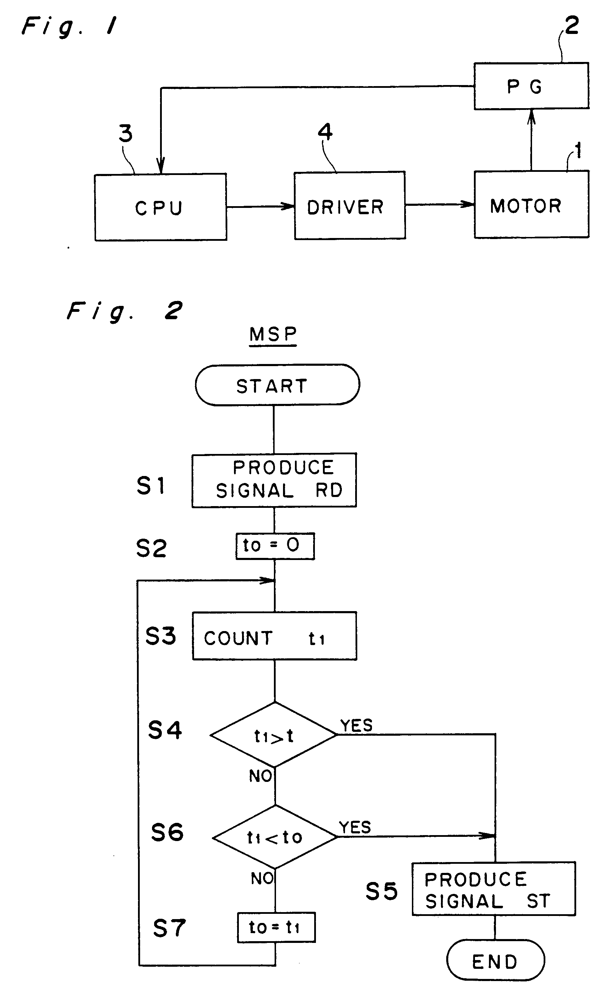

In Fig. 1, a motor stop control device according to a preferred embodiment of the present invention is shown. In the drawing, reference number 1 is a motor which drives the spindle of the magneto-optical disk, and 2 is a pulse generator which detects the rotation of motor 1 and outputs a rectangularly shaped pulse signal having a frequency relative to the rotational speed of the motor. For example, when motor 1 makes one complete rotation, 36 pulses are generated. Reference number 3 is a CPU which receives the pulse signal from pulse generator 2 for use in a motor stop control operation as shown in Fig. 2, and 4 is a driver which receives either one of a forward drive signal FD, a stop signal ST or a reverse drive signal RD and drives motor 1 based on these signals FD, ST, and RD. When signal FD is applied, driver 4 drives motor 1 to generate a forward driving torque. When signal ST is applied, driver 4 drives motor 1 to generate no torque or a holding torque. And when signal RD is applied, driver 4 drives motor 1 to generate a reverse driving torque.

Next, the operation of the motor stop control device is described.

Referring to Fig. 2, a motor stop program MSP is described which is initiated when CPU 3 receives from a pre-stage circuit (not shown) a stop command signal for stopping motor 1.

It is assumed that motor 1 is running forward, and when the stop command is received, CPU 3 starts the motor stop program MSP so that at a step S1, CPU 3 produces the signal RD so as to generate the reverse driving torque in motor 1 to forcibly slow down the motor 1.

Next, at a step S2, a memory provided in CPU 3 and storing a value t0 is reset, i.e., set to 0 (zero). The value t0 in the memory expresses the previous pulse width as will be described later.

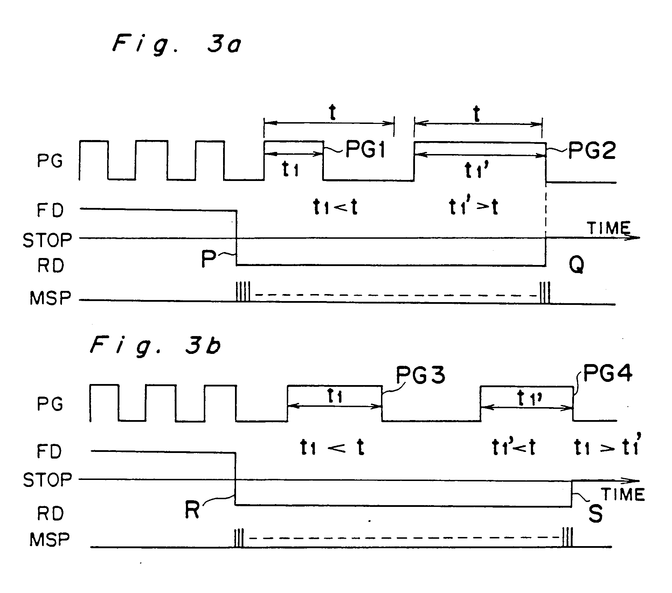

Next, at a step S3, a timer in CPU 3 is operated to count the time of pulse width t1 (Fig. 3) of the pulse signal. This is done in such a manner that CPU 3 detects whether the pulse signal PG is present or not. If yes, the timer in CPU 3 is incremented.

Next, at a step S4, pulse width t1 of the pulse signal PG counted in step S3 is compared with a predetermined constant t. Constant t is an empirically obtained value representing a pulse width of the pulse signal PG that will be produced at a moment immediately before motor 1 stops. At step S3, if the counted pulse width t1 of the pulse signal PG is greater than constant t, it is understood that motor 1 is about to stop, so that the program goes to a step S5 to produce the signal ST, thereby completely stopping the motor 1. Thereafter, the motor stop program MSP ends.

On the other hand, if at step S4 pulse width t1 of the pulse signal is smaller than constant t, the program advances to a step S6 to compare the present pulse width t1 with the previous pulse width t0. At the first cycle of motor stop program MSP, the program advances to a step S7, since the value t0 in the memory is initially set to 0. At step S7, the value t0 as stored in the memory is renewed with the present pulse width t1. Thereafter, a next cycle of motor stop program MSP starts from step S3.

Referring to Fig. 3a, a first model case for stopping the motor 1 is described. At a time P, it is assumed that a stop command is produced so that the motor stop program MSP is initiated as diagrammatically shown in the bottom row of Fig. 3a, in which each line pulse indicates one cycle of motor stop program MSP. Thus, at time P, CPU 3 which has been producing the forward drive signal FD starts to produce the reverse drive signal RD (step S1). After a number of cycles, the count value of a timer for counting the pulse width t1 of a pulse signal PG1 increases, but in the example shown in Fig. 3a, the pulse width t1 is smaller than the predetermined constant t. Therefore, steps S3, S4, S6 and S7 are repeated. At a cycle occurring immediately after the trailing edge of pulse signal PG1, the counted pulse width t1 is shifted as t0 to the memory.

Thereafter, when the second pulse signal PG2 appears, the timer starts to count a pulse width t1'. When the counted value for counting the pulse width t1' exceeds the predetermined constant t, such as at time Q in Fig. 3a, the program advances from step S4 to step S5 to end the motor stop program MSP, eventually stopping the motor 1.

Referring to Fig. 3b, a second model case for stopping the motor 1 is shown. At a time R, it is assumed that a stop command is produced so that the motor stop program MSP is initiated and CPU 3 starts to produce the reverse drive signal RD (step S1). After a number of cycles, the count value of the timer for counting the pulse width t1 of pulse signal PG3 increases, but in the example shown in Fig. 3b, the pulse width t1 is smaller than the predetermined constant t. Therefore, steps S3, S4, S6 and S7 are repeated. At a cycle occurring immediately after the trailing edge of pulse signal PG3, the counted pulse width t1 is shifted to memory t0.

Thereafter, when the second pulse signal PG4 appears, the timer starts to count the pulse width t1'. At the end of the second pulse signal PG4 (i.e., time S), if it is detected that the counted value of the pulse width t1' is smaller than the predetermined constant t, and is smaller than the pulse width t0(=t1 of the previous pulse PG3), program advances from step S6 to step S5 to end the motor stop program MSP, eventually stopping the motor 1. In this case, it is detected that the motor has just started to rotate in the reverse direction.

A similar operation is performed when stopping the motor during the reverse direction rotation.

According to the present invention, since the reverse drive signal RD of the motor is stopped immediately before or after the complete stop of the motor 1, motor 1 can be stopped in a stable manner without making many reverse turns.

## Claims

1. A motor stop control device for controlling a rapid stop of a spindle motor which is rotating in a first direction, by applying a counter torque to said motor as long till a reversal in the rotational direction is detected, **characterized by:**
   - a driver (4) for driving said motor in at least three different states, which function to generate a first direction driving torque, a reverse direction driving torque, and no torque or a holding torque;
   - a pulse generator (2) for generating a pulse signal (PG) having a frequency corresponding to the rotational speed of said motor;
   - a pulse width detecting means (3, step S3) for detecting the pulse width (t3) of said pulse signal;

- a storing means (3, step S7) for storing the pulse width (t0) of the pulse signal in a cycle preceding the present cycle;
- a comparator means (3, step S6) for comparing the pulse width (t1) of the present cycle with said stored pulse width (t0) of the previous cycle, and for producing a terminate signal when said pulse width of the present cycle is smaller than said stored pulse width; and
- a control means (3, step S1, step S5) for controlling said driver such that in response to the receipt of a stop command, said driver drives said motor to generate said reverse direction driving torque, and drives said motor, in response to the receipt of said terminate signal, to generate no torque or said holding torque.

**2.** A device according to claim 1, **characterized by**
- a second comparator means (3, step S4) for comparing the pulse width (t1) of the present cycle with a predetermined pulse width (t), and for producing said terminate signal also then when the pulse width of the actual cycle exceeds said predetermined pulse width.

**Patentansprüche**

**1.** Steuervorrichtung zum Anhalten eines Motors, um ein schnelles Anhalten eines sich in einer ersten Richtung drehenden Spindelmotors dadurch zu steuern, daß ein Gegendrehmoment so lange an den Motor angelegt wird, bis eine Umkehrung in der Drehrichtung festgestellt wird, **gekennzeichnet durch:**
- einen Treiber (4) zum Treiben des Motors in mindestens drei unterschiedlichen Betriebszuständen, die dazu dienen, das Antriebsmoment für eine erste Richtung, ein Antriebsmoment für die Gegenrichtung und kein Drehmoment oder ein Haltedrehmoment zu erzeugen;
- einen Pulsgenerator (2) zum Erzeugen eines Pulssignals (PG) mit einer Frequenz, die der Drehzahl des Motors entspricht;
- eine Pulsbreiten-Detektoreinrichtung (3, Schritt S3) zum Ermitteln der Pulsbreite (t3) des Pulssignals;
- eine Speichereinrichtung (3, Schritt S7) zum Speichern der Pulsbreite (t0) des Pulssignals für einen Zyklus vor dem aktuellen Zyklus;

- eine Komparatoreinrichtung (3, Schritt S6) zum Vergleichen der Pulsbreite (t1) des aktuellen Zyklus mit der gespeicherten Pulsbreite (t0) für den vorigen Zyklus und zum Erzeugen eines Beendigungssignales, wenn die Pulsbreite im aktuellen Zyklus kleiner ist als die gespeicherte Pulsbreite; und
- eine Steuereinrichtung (3, Schritt S1, Schritt S5) zum Steuern des Treibers in solcher Weise, daß er auf Empfang eines Stoppbefehls hin den Motor so antreibt, daß das Antriebsmoment in Gegenrichtung erzeugt wird und den Motor auf Empfang des Beendigungssignals so antreibt, daß kein Drehmoment oder das Haltedrehmoment erzeugt wird.

**2.** Vorrichtung nach Anspruch 1, **gekennzeichnet durch**
- eine zweite Komparatoreinrichtung (3, Schritt S4) zum Vergleichen der Pulsbreite (t1) des aktuellen Zyklus mit einer vorgegebenen Pulsbreite (t) und zum Erzeugen des Beendigungssignals auch dann, wenn die Pulsbreite im aktuellen Zyklus die vorgegebene Pulsbreite überschreitet.

**Revendications**

**1.** Dispositif de commande d'arrêt de moteur pour commander un arrêt rapide d'un moteur à broche qui est entraîné en rotation dans un premier sens, par l'application d'un contre-couple audit moteur jusqu'à ce qu'une inversion de sens de rotation soit détectée, caractérisé par :
- un circuit de pilotage (4) pour piloter ledit moteur dans au moins trois états différents, qui fonctionne pour produire un premier couple d'entraînement dans un sens, un couple d'entraînement en sens inverse et aucun couple ou un couple de maintien ;
- un générateur d'impulsions (2) pour produire un signal d'impulsion (PG) ayant une fréquence correspondant à celle de la vitesse de rotation dudit moteur ;
- un moyen détecteur de largeur d'impulsion (3, étape S3) pour détecter la largeur d'impulsion (t3) dudit signal d'impulsion ;
- un moyen mémorisateur (3, étape S7) pour mémoriser la largeur d'impulsion (t0) du signal d'impulsion du cycle précédant le cycle en cours ;
- un moyen comparateur (3, étape S6) pour comparer la largeur d'impulsion (t1) du cycle en cours avec ladite largeur d'impulsion (t0) du cycle précédent, et pour produire un signal de fin lorsque ladite largeur d'impulsion du cycle en cours est inférieure à ladite largeur d'impulsion mémorisée; et

- un moyen de commande (3, étape S1, étape S5) pour commander ledit circuit de pilotage de sorte que en réponse à la réception d'un ordre d'arrêt, ledit circuit de pilotage entraîne le moteur à produire ledit couple d'entraînement en sens inverse, et entraîne ledit moteur, en réponse à la réception dudit signal de fin, à ne produire aucun couple ou ledit couple de maintien.

2. Dispositif selon la revendication 1, caractérisé par :
   - un deuxième moyen comparateur (3, étape S4) pour comparer la largeur d'impulsion (t1) du cycle en cours avec une largeur d'impulsion prédéterminée (t), et pour produire ledit signal de fin aussi lorsque la largeur d'impulsion du cycle en cours excède alors ladite largeur d'impulsion prédéterminée.

*Fig. 1*

```
                                    ┌─────────┐  2
                                    │   P G   │
                                    └─────────┘
     3                    4              ↑      1
  ┌─────────┐        ┌──────────┐   ┌──────────┐
  │   CPU   │───────▶│  DRIVER  │──▶│  MOTOR   │
  └─────────┘        └──────────┘   └──────────┘
```

*Fig. 2*

MSP

```
        ┌─────────────────┐
        │      START      │
        └─────────────────┘
                 │
        ┌─────────────────┐
   S1   │     PRODUCE     │
        │   SIGNAL  RD    │
        └─────────────────┘
                 │
   S2        │ to = O │
                 │
                 ▼
        ┌─────────────────┐
   S3   │  COUNT     t1   │
        └─────────────────┘
                 │
                 ◇
   S4        t1 > t    ──YES──┐
                 │            │
                NO            │
                 │            │
                 ◇            │
   S6        t1 < to  ──YES──▶│
                 │            │
                NO            ▼
                 │   ┌─────────────────┐
   S7      │ to = t1 │  S5 │    PRODUCE     │
                 │   │   SIGNAL   ST   │
                 │   └─────────────────┘
                 │            │
                      ┌─────────────┐
                      │     END     │
                      └─────────────┘
```

7

# *Fig. 3a*

# *Fig. 3b*